# FASCICULE DE BREVET EUROPEEN

(11) **EP 3 650 308 B1**
(45) Date de publication et mention de la délivrance du brevet: **23.06.2021**
(21) Numéro de dépôt: 19020430.5
(22) Date de dépôt: 16.07.2019
(51) Int. Cl.: B62B 3/02

(54) **CHARIOT PLIABLE AVEC PLATEAU STRUCTURE BOIS POUR BAGAGES**
ZUSAMMENKLAPPBARER WAGEN MIT HOLZKONSTRUKTIONSPLATTE FÜR GEPÄCK
FOLDING CARRIAGE WITH WOODEN STRUCTURE PLATFORM FOR LUGGAGE

(30) Priorité: 17.07.2018 LU 100872
(43) Date de publication de la demande: 13.05.2020
(73) Titulaire: Gandang Banag Auneau, Pascaline, 4071 Esch-sur-Alzette (LU)
(72) Inventeur: Gandang Banag Auneau, Pascaline, 4071 Esch-sur-Alzette (LU)

(56) Documents cités:
- WO-A1-98/08721
- WO-A1-2007/045706
- FR-A1- 2 903 583
- US-A- 2 469 242

## Description

La présente invention concerne la création d'un chariot pliable avec un plateau et une structure en bois pour porter des bagages.

Un produit industriel conçu pour transporter et supporter les bagages du passager de compagnie aérienne lors du voyage est proposé par la présente invention.

On connaît l'existence de chariots roulants pour valises qui ont pour la plupart des poids et/ou volumes importants en moyenne 8 kg pour un chariot à bagages et dont le plateau est constitué en aluminium, plastique PVC ou acier.

On connaît également l'existence dans le secteur du transport de bagages, de certains chariots qui ne peuvent pas être pliables ni transportables comme un bagage de type cabine, d'autres ne peuvent pas supporter et transporter deux bagages de type bagage en soute auxquels s'ajoute un bagage de type cabine. Le document US 2 469 242 A décrit un chariot pliable, dans lequel la poignée est rangée sous la plate-forme.

L'invention a pour but d'une part, de remédier aux contraintes de praticité dont les chariots actuels sont dépourvus avec des volumes et/ou poids importants ou encore inexistants dans certains lieux pour le voyageur. L'invention a pour but d'autre part de transporter l'ensemble des bagages du voyageur ou autre objet de même nature, permettant ainsi d'augmenter le confort du passager durant le voyage, de l'embarquement au débarquement ainsi que durant les déplacements jusqu'à leur véhicule et leur domicile. Dans les situations ci-dessus et dans d'autres, la liste n'étant pas exhaustive, il existe un besoin de ce type de chariot. L'invention propose un outil de modernité qui se transporte à la main et se glisse dans le bagage, fonctionnel et pratique.

L'invention sera mieux comprise à la lecture de la description qui suit.

Un chariot pliable avec plateau structure bois pour bagages selon l'invention comporte les éléments suivants : un plateau rectangulaire en lamellé collé érable ; quatre roues de 39 mm de hauteur, pivotantes et dont deux avec frein ; des charnières ; des tubes en aluminium de sections et d'épaisseurs standards, de formes et dimensions adaptés, des tubes carrés et rectangulaires ; des tubes au milieu du chariot déployé ; un système de bloquage positon ouverte et bloquage positon fermée ; des axes en acier ; un système de poignée télescopique avec un bouton poussoir ; une barre de blocage ; un espace vide entre la poignée et le milieu du chariot ; un sac pochette ajusté, détachable, fermable et ouvrable de taille A4.

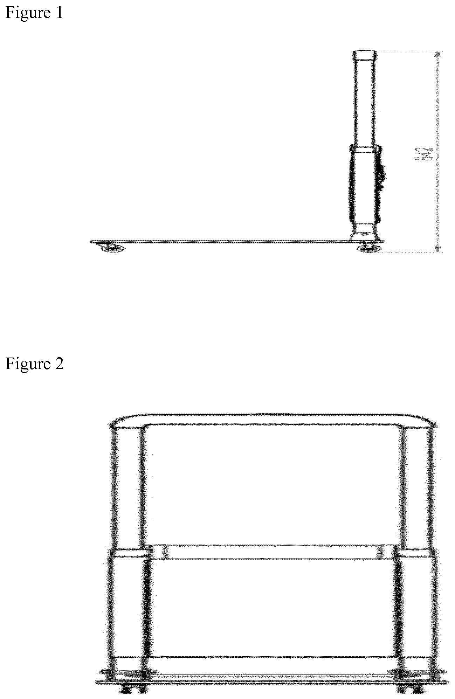

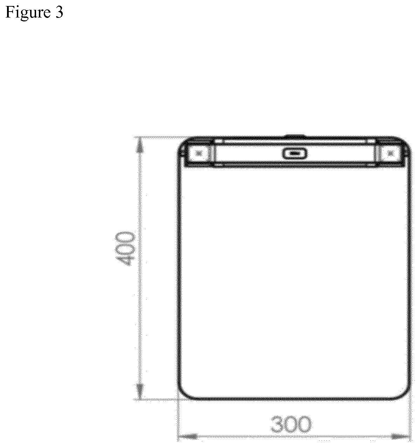

Selon l'invention, la partie basse du chariot, horizontale, est constituée d'un plateau rectangulaire, surface de portée en lamellé collé érable posé et fixé sur des roues au travers de charnières (fig.1) qui supporte et transporte la charge de deux grandes valises soute de 32 kg et une valise cabine de 16 kg. Le lamellé-collé érable dispose d'attributs de longévité, de résistance et de légèreté. Le chariot a pour dimensions en longueur et largeur 400x300 mm (fig.3), 842 mm de hauteur (fig.1) et un poids de 3 kg, les dimensions poids et tailles du chariot à l'état plié sont comprises dans celles autorisées pour un bagage cabine standard pour les compagnies aériennes.

Selon une réalisation préférée, le système de bloquage positon ouverte et bloquage positon fermée est réalisé par les axes en acier sur la partie basse du chariot qui relie le plateau avec la partie haute du chariot (fig.1) et (fig.2), permettant ainsi de réaliser une liaison pivot, à laquelle s'ajoute une barre de blocage passant à travers les tubes et les supports et d'axes de pivot soudés aux supports et passant à travers les tubes.

Selon une autre réalisation préférée, la partie haute du chariot, verticale, est composée de tubes en aluminium de sections et d'épaisseurs standards de formes et dimensions adaptées, des tubes intérieurs et extérieurs carrés, des tubes extérieurs rectangulaires (fig.2) perpendiculaires et parallèles au plateau, pour garantir la résistance de la poignée lors de l'utilisation sur une surface plane et le chevauchement des tubes pour le pliage ou le déploiement. Le chevauchement des tubes est permis par la soudure entre une poignée et les tubes intérieurs et une liaison glissière entre les tubes intérieurs et extérieurs.

Selon une autre réalisation préférée, le bouton poussoir du système de poignée télescopique est situé sur la partie haute, la poignée étant solidaire perpendiculairement à des tubes en aluminium intérieurs et extérieurs carrés (fig.2) et (fig.3) permettant de ranger le chariot ou de l'insérer à l'intérieur du bagage.

Selon autre une réalisation préférée, la partie haute inclut en son milieu des tubes rectangulaires parallèles à la partie poignée et partie basse, le milieu étant solidaire à des tubes en aluminium intérieurs et extérieurs carrés, (fig.1) et (fig.2). Le chariot possède un espace vide entre la poignée et le milieu du chariot lorsqu'il est plié pour insérer la main facilitant ainsi son déploiement et pliage sans effort, et présentant un volume d'encombrement réduit.

Selon une autre réalisation préférée, les quatre roues de 39 mm de hauteur, pivotantes et dont deux avec frein, peuvent supporter 80 kg de charge avec un coefficient de sécurité de 1,5 (fig.2) et (fig.3) et constituent ainsi un moyen de déplacement par roulement du chariot déployé.

Selon autre une réalisation préférée, la partie du sac pochette ajusté, détachable, fermable et ouvrable de taille A4 (fig.1) et (fig. 2) de forme rectangulaire rejoint le plateau lorsque le chariot est plié (fig.3). Le sac pochette servant de rangement de petits effets personnels du voyageur, passeport, téléphone, portefeuille et stylo.

### Brève description des dessins :

La figure 1 est un dessin technique vu de côté du chariot selon la présente invention en position déployée.
La figure 2 est un dessin technique vu de face dudit chariot en position développée pour porter les bagages.
La figure 3 est un dessin technique du chariot en position pliée vu coupe partielle.

## Revendications

1. Chariot pliable avec une structure de plateau en bois pour supporter et transporter des bagages, comprenant les éléments suivants :
un plateau rectangulaire ; quatre roues de 39 mm de hauteur, pivotantes ; des charnières ; des tubes en aluminium de sections et d'épaisseurs standards, de formes et dimensions adaptées, des tubes carrés et rectangulaires ;
des tubes au milieu du chariot déployé ; un système de bloquage positon ouverte et bloquage positon fermée ; des axes en acier ; un système de poignée télescopique avec un bouton poussoir ; une barre de blocage ; un espace vide entre la poignée et le milieu du chariot ; **caractérisé en ce que** la partie basse du chariot, horizontale, est constituée du plateau rectangulaire dont la surface de portée est en érable lamellé collé, posé et fixé entre les roues et les charnières pour supporter et transporter la charge de deux grandes valises de 32 kg et une valise cabine de 16 kg, **en ce que** le chariot, pesant 3 kg, a une longueur de 400 mm, une largeur de 300 mm et une hauteur de 842 mm dans l'état déployé, **en ce que** les dimensions poids et tailles du chariot dans l'état plié sont comprises dans celles autorisées pour un bagage cabine standard pour les compagnies aériennes , **en ce que** deux roues ont un frein et **en ce que** le chariot comprend un sac pochette ajusté, détachable du chariot, fermable et ouvrable de taille A4.

2. Chariot pliable avec une structure de plateau en bois pour supporter et transporter des bagages selon la revendication 1, **caractérisé en ce que** le système de bloquage positon ouverte et bloquage positon fermée est réalisé par les axes en acier sur la partie basse du chariot qui relie le plateau avec une partie haute du chariot, permettant ainsi de réaliser une liaison pivot, à laquelle s'ajoute une barre de blocage passant à travers les tubes et les supports et d'axes de pivot soudés aux supports.

3. Chariot pliable avec une structure de plateau en bois pour supporter et transporter des bagages selon la revendication 2, **caractérisé en ce que** la partie haute du chariot, verticale, est composée de tubes en aluminium de sections et d'épaisseurs standards de formes et dimensions adaptées, de tubes intérieurs et extérieurs carrés, de tubes extérieurs rectangulaires perpendiculaires et parallèles au plateau, pour garantir la résistance de la poignée lors de l'utilisation sur une surface plane et le chevauchement des tubes pour le pliage ou le déploiement, le chevauchement des tubes étant permis par une soudure entre la poignée et les tubes intérieurs et une liaison glissière entre les tubes intérieurs et extérieurs.

4. Chariot pliable avec une structure de plateau en bois pour supporter et transporter des bagages selon la revendication 2 ou 3, **caractérisé en ce que** le bouton poussoir du système de poignée télescopique est situé sur la partie haute, la poignée étant solidaire des tubes en aluminium intérieurs et extérieurs carrés, permettant de ranger le chariot ou de l'insérer à l'intérieur du bagage.

5. Chariot pliable avec une structure de plateau en bois pour supporter et transporter des bagages selon la revendication 2, 3 ou 4, **caractérisé en ce que** la partie haute inclut au milieu du chariot déployé des tubes rectangulaires parallèles à la poignée et à la partie basse, le milieu étant solidaire des tubes en aluminium intérieurs et extérieurs carrés, et **en ce qu'**il possède un espace vide entre la poignée et le milieu du chariot lorsqu'il est plié pour insérer la main, facilitant ainsi son déploiement et pliage sans effort.

6. Chariot pliable avec une structure de plateau en bois pour supporter et transporter des bagages selon la revendication 1, caractérisé en que les quatre roues de 39 mm de hauteur, pivotantes et dont deux avec frein, peuvent supporter 80 kg de charge avec un coefficient de sécurité de 1,5 et constituent ainsi un moyen de déplacement par roulement du chariot déployé.

7. Chariot pliable avec une structure de plateau en bois pour supporter et transporter des bagages selon la revendication 1, 2, 3, 4, 5, ou 6, **caractérisé en ce que** la partie du sac pochette ajusté, détachable, fermable et ouvrable de taille A4, de forme rectangulaire rejoint le plateau lorsque le chariot est plié.

## Patentansprüche

1. Faltbarer Wagen mit einer Holzablage zum Tragen und Transportieren von Gepäck, umfassend: eine rechteckige Ablage; vier Räder 39 mm hoch, drehbar; Scharniere; Aluminiumrohre mit Standardprofilen und -dicken, geeigneten Formen und Größen, quadratischen und rechteckigen Rohren; Rohre in der Mitte des eingesetzten Wagens; ein Verriegelungssystem mit offener Position und ein Verriegelungssystem mit geschlossener Position; Stahlachsen; ein Teleskopgriffsystem mit einem Druckknopf; eine Verriegelungsstange; ein leerer Raum zwischen dem Griff und der Mitte des Wagens; **dadurch gekennzeichnet, dass** der untere Teil des Wagens, horizontal, aus der rechteckigen Oberseite besteht, deren Auflagefläche aus geklebtem laminiertem Ahorn besteht und zwischen den Rädern und den Scharnieren befestigt ist, um die Last von zwei großen 32-kg-Koffern und zu tragen und zu transportieren Ein 16 kg schwerer Kabinenkoffer, bei dem der Wagen mit einem Gewicht von 3 kg eine Länge von 400 mm, eine Breite von 300 mm und eine Höhe von 842 mm im ausgefahrenen Zustand hat, indem der Wagen mit einem Gewicht von 3 kg eine Länge von 400 mm und eine Breite von 400 mm hat 300 mm und eine Höhe von 842 mm im ausgefahrenen Zustand, da die Abmessungen, das Gewicht und die Größe des Wagens im zusammengeklappten Zustand innerhalb der für Standard-Handgepäck für Fluggesellschaften zulässigen Werte liegen, da zwei Räder eine Bremse haben und der Wagen enthält eine angepasste, vom Wagen abnehmbare, verschließbare und zu öffnende Beuteltasche im A4-Format.

2. Faltbarer Wagen mit einer hölzernen Plattformstruktur zum Tragen und Transportieren von Gepäck nach Anspruch 1, **gekennzeichnet dadurch, dass** die offene Position des Schließsystems und die geschlossene Position des Verriegelungssystems durch die Stahlstifte am unteren Teil des Wagens erreicht werden, der die Platte mit einem verbindet oberer Teil des Wagens, wodurch es möglich wird, eine Schwenkverbindung zu erreichen, zu der eine Verriegelungsstange hinzugefügt wird, die durch die Rohre verläuft, und die Stützen und Schwenkstifte, die mit den Stützen verschweißt sind.

3. Faltbarer Wagen mit einer hölzernen Plattformstruktur zum Tragen und Transportieren von Gepäck nach Anspruch 2, **gekennzeichnet dadurch, dass** der obere Teil des Wagens vertikal aus Aluminiumrohren mit Standardabschnitten und Dicken von Formen und geeigneten Abmessungen mit quadratischem Innenraum besteht und Außenrohre aus rechteckigen Außenrohren senkrecht und parallel zur Tischplatte, um die Festigkeit des Griffs bei Verwendung auf einer ebenen Fläche und die Überlappung der Rohre zum Biegen oder Entfalten sicherzustellen, wobei überlappende Rohre durch eine Schweißnaht zwischen dem Griff ermöglicht werden und die Innenrohre und eine Gleitverbindung zwischen den Innen- und Außenrohren.

4. Klappwagen mit einer hölzernen Plattformstruktur zum Tragen und Transportieren von Gepäck nach Anspruch 2 oder 3, **gekennzeichnet dadurch, dass** sich der Druckknopf des Teleskopgriffsystems im oberen Teil befindet, wobei der Griff in die Rohre im Aluminiuminneren integriert ist und Außenquadrat, in dem der Wagen aufbewahrt oder in das Gepäck eingesetzt werden kann.

5. Faltbarer Wagen mit einer hölzernen Plattformstruktur zum Tragen und Transportieren von Gepäck gemäß Anspruch 2, 3 oder 4, **gekennzeichnet dadurch, dass** der obere Teil in der Mitte des eingesetzten Wagens rechteckige Rohre parallel zum Griff und zum unteren Teil enthält; Die Mitte ist einstückig mit den quadratischen Aluminiumrohren im Innen- und Außenbereich und hat beim Zusammenklappen einen leeren Raum zwischen dem Griff und der Mitte des Wagens, um die Hand einzuführen, wodurch das Entfalten und Zusammenklappen mühelos erleichtert wird.

6. Klappwagen mit einer hölzernen Plattformstruktur zum Tragen und Transportieren von Gepäck nach Anspruch 1, **gekennzeichnet dadurch, dass** die vier schwenkbaren Räder mit einer Höhe von 39 mm und zwei mit Bremse 80 kg Last mit einem Sicherheitskoeffizienten von 1,5 tragen können und die somit ein Bewegungsmittel darstellen, indem der ausgefahrene Wagen gerollt wird.

7. Faltbarer Wagen mit einer Holzablage zum Tragen und Transportieren von Gepäck nach Anspruch 1,2,3,4,5 oder 6, **dadurch gekennzeichnet, dass** sich der Teil der Taschentasche in der rechteckigen Form der Größe A4 einstellt, abnehmbar, verschließbar und zu öffnend verbindet das Tablett, wenn der Wagen zusammengeklappt ist.

## Claims

1. Foldable trolley with a wooden tray structure for supporting and transporting luggage, comprising the following: a rectangular tray; four wheels 39 mm high, swivel; hinges; aluminum tubes of standard sections and thicknesses, suitable shapes and sizes, square and rectangular tubes; tubes in the middle of the deployed cart; an open position locking and closed position locking system; steel axles; a telescopic handle system with a push button; a locking bar; an empty space between the handle and the middle of the carriage; **characterized in that** the lower part of the trolley, horizontal, consists of the rectangular top, the bearing surface of which is in glued laminated maple, and fixed between the wheels and the hinges to support and transport the load of two large 32 kg suitcases and a 16kg cabin suitcase, **in that** the trolley, weighing 3kg, has a length of 400mm, a width of 300mm and a height of 842mm in the deployed state, **in that** the trolley, weighing 3kg, has a length of 400mm, a width of 300mm and a height of 842mm in the extended state, **in that** the dimensions, weight and sizes of the trolley in the folded state are within those allowed for standard cabin baggage for airlines, **in that** two wheels have a brake and **in that** the trolley includes a fitted, detachable from the trolley, closable and openable pocket bag in A4 size.

2. Foldable trolley with a wooden platform structure for supporting and transporting luggage according to claim 1, **characterized in that** the locking system open position and locking closed position is achieved by the steel pins on the lower part of the trolley which connects the plate with an upper part of the carriage, thus making it possible to achieve a pivot connection, to which is added a locking bar passing through the tubes and the supports and pivot pins welded to the supports.

3. Foldable trolley with a wooden tray structure for supporting and transporting luggage according to claim 2, **characterized in that** the upper part of the trolley, vertical, is composed of aluminum tubes of standard sections and thicknesses of shapes and suitable dimensions, of square inner and outer tubes, of rectangular outer tubes perpendicular and parallel to the table top, to ensure the strength of the handle when using on a flat surface and the overlap of the tubes for bending or unfolding, overlapping tubes being allowed by a weld between the handle and the inner tubes and a sliding connection between the inner and outer tubes.

4. Folding trolley with a wooden platform structure for supporting and transporting luggage according to claim 2 or 3, **characterized in that** the push button of the telescopic handle system is located on the upper part, the handle being integral with the tubes in aluminum interior and exterior square, allowing to store the trolley or to insert it inside the luggage.

5. Foldable trolley with a wooden platform structure for supporting and transporting luggage according to claim 2, 3, or 4, **characterized in that** the upper part includes in the middle of the deployed trolley rectangular tubes parallel to the handle and to the lower part, the middle being integral with the interior and exterior square aluminum tubes, and **in that** it has an empty space between the handle and the middle of the trolley when it is folded to insert the hand, thus facilitating its deployment and folding effortlessly.

6. Folding trolley with a wooden platform structure for supporting and transporting luggage according to claim 1, **characterized in that** the four wheels 39 mm in height, swivel and two of which with brake, can support 80 kg of load with a coefficient safety of 1.5 and which thus constitute a means of movement by rolling the deployed trolley.

7. Foldable trolley with a wooden tray structure for supporting and transporting luggage according to claim 1,2,3,4,5 or 6 **characterized in that** the part of the pocket bag adjusted, detachable, closable and openable A4 size , rectangular shape joins the tray when the trolley is folded.
